# EUROPÄISCHE PATENTSCHRIFT

(11) **EP 2 539 612 B1**
(45) Veröffentlichungstag und Bekanntmachung des Hinweises auf die Patenterteilung: **19.04.2017**
(21) Anmeldenummer: 10787698.9
(22) Anmeldetag: 01.12.2010
(51) Int. Cl.: F16H 61/70

(54) **GRUPPENGETRIEBEVORRICHTUNG**
GROUP TRANSMISSION DEVICE
DISPOSITIF BOÎTE DE VITESSE GROUPÉE

(30) Priorität: 27.02.2010 DE 102010009673
(43) Veröffentlichungstag der Anmeldung: 02.01.2013
(73) Patentinhaber: Daimler AG, 70327 Stuttgart (DE)
(72) Erfinder: GUGGOLZ, Manfred, 71229 Leonberg (DE); ULMER, David, 70794 Filderstadt (DE)
(74) Vertreter: JENSEN & SON
(86) Internationale Anmeldenummer: PCT/EP2010/007295
(87) Internationale Veröffentlichungsnummer: WO 2011/103897

(56) Entgegenhaltungen:
- WO-A1-2004/037590
- WO-A1-2005/065982
- WO-A1-2007/031191
- DE-A1- 10 152 857
- DE-A1-102005 043 703
- DE-B3-102005 032 225

## Beschreibung

Die Erfindung betrifft eine Gruppengetriebevorrichtung nach dem Oberbegriff des Anspruchs 1 und einem Verfahren nach dem Oberbegriff des Anspruchs 8. Aus der DE 101 52 857 A1 ist bereits eine Gruppengetriebevorrichtung mit einer Hauptgruppe, die eine Zentral-Synchronisiereinheit zur Synchronisierung von Hauptgruppen-Schalteinheiten, zur Änderung einer Hauptgruppenübersetzung, aufweist, mit einer Nebengruppe, die Nebengruppen-Schalteinheiten zur Änderung einer Nebengruppenübersetzung aufweist, und mit einer Steuer- und/oder Regeleinheit, die dazu vorgesehen ist, in einem Schaltvorgang zur Änderung einer Getriebegesamtübersetzung die Nebengruppen-Schalteinheiten und die Zentral-Synchronisiereinheit zu betätigen, bekannt.

Aus der WO 2005/065982 A1, welche alle Merkmale des Oberbegriffs des Anspruchs 1 bzw. des Anspruchs 8 offenbart, ist eine Gruppengetriebevorrichtung bekannt, bei welcher darüber hinaus die Zentral-Synchronisiereinheit dazu vorgesehen ist, eine Synchronisierwirkung unabhängig von einer Betätigung einer der Zentralsynchronisiereinheit zugeordneten Schalteinheit aufzubringen.

Der Erfindung liegt insbesondere die Aufgabe zugrunde, Gangwechselzeiten der Gruppengetriebevorrichtung zu verkürzen. Sie wird gemäß der Erfindung durch die Merkmale des Anspruchs 1 und einem Verfahren gem. Anspruch 8 gelöst. Weitere Ausgestaltungen ergeben sich aus den Unteransprüchen.

Die Erfindung geht aus von einer Gruppengetriebevorrichtung, insbesondere eine Nutzfahrzeuggruppengetriebevorrichtung, mit einer Hauptgruppe, die eine Zentral-Synchronisiereinheit zur Synchronisierung von zumindest zwei Hauptgruppen-Schalteinheiten, zur Änderung einer Hauptgruppenübersetzung, aufweist, mit einer Nebengruppe, die eine Nebengruppen-Schalteinheit zur Änderung einer Nebengruppenübersetzung aufweist, und mit einer Steuer- und/oder Regeleinheit, die dazu vorgesehen ist, in einem Schaltvorgang zur Änderung einer Getriebegesamtübersetzung die Nebengruppen-Schalteinheit und die Zentral-Synchronisiereinheit zu betätigen.

Es wird ***davon ausgegangen**,* dass die Steuer- und/oder Regeleinheit dazu vorgesehen ist, die Nebengruppen-Schalteinheit und die Zentral-Synchronisiereinheit zumindest zeitweise parallel zu betätigen. Durch die zeitweise parallele Betätigung kann die Nebengruppen-Schalteinheit beim Synchronisieren der Hauptgruppen-Schalteinheit vorsynchronisiert werden. Dadurch können insbesondere Schaltvorgänge zur Änderung einer Getriebegesamtübersetzung, bei denen die Hauptgruppe und die Nebengruppe geschaltet werden, schneller durchgeführt werden, wodurch Gangwechselzeiten verkürzt werden können. Durch eine Verkürzung der Gangwechselzeiten wiederum kann eine Schaltstrategie der Steuer- und/oder Regeleinheit verbrauchsoptimiert gestaltet werden, wobei Getriebegangwechsel zur Umsetzung dieser Schaltstrategie gewohnt schnell und komfortabel durchgeführt werden. Unter einer "parallelen Betätigung" soll insbesondere eine zeitgleiche Betätigung verstanden werden. Bei einer parallelen Betätigung fallen eine Betätigungsphase der Nebengruppen-Schalteinheit und eine Betätigungsphase der Zentral-Synchronisiereinheit vorzugsweise zusammen. Unter einer "zeitweise parallelen Betätigung" soll insbesondere verstanden werden, dass eine der Betätigungsphasen innerhalb der anderen Betätigungsphase liegt. Die Betätigungsphasen können sich vorzugsweise in ihrer Dauer voneinander unterscheiden. Vorteilhafterweise unterscheidet sich ein Aktivierungspunkt der Betätigungsphase der Nebengruppen-Schalteinheit von einem Aktivierungspunkt der Betätigungsphase der Zentral-Synchronisiereinheit voneinander. Unter einer "Betätigungsphase" soll insbesondere eine Phase verstanden werden, in der die Nebengruppen-Schalteinheit bzw. die Zentral-Synchronisiereinheit von der Steuer- und/oder Regeleinheit angesteuert wird. Unter einem "Betätigen einer Schalteinheit" soll insbesondere eine Veränderung ihrer Schaltstellung verstanden werden. Unter einem "Betätigen der Synchronisiereinheit" soll insbesondere ein Aktivieren verstanden werden, in dem die Synchronisiereinheit eine Synchronisierwirkung bereitstellt. Unter einer "Zentral-Synchronisiereinheit" soll insbesondere eine Synchronisiereinheit verstanden werden, die mehreren Schalteinheiten zugeordnet ist. Die Zentral-Synchronisiereinheit ist vorzugsweise eine aktive Zentral-Synchronisiereinheit. Unter einer "aktiven Zentral-Synchronisiereinheit" soll insbesondere eine Zentral-Synchronisiereinheit verstanden werden, die eine Synchronisierwirkung unabhängig von einer Betätigung einer Schalteinheit aufbringen kann. Die aktive Zentral-Synchronisiereinheit verändert vorteilhafterweise aktiv eine Drehzahl der Hauptgruppe, wie beispielsweise eine Drehzahl der Hauptgruppe zugeordneten Losräder oder einer der Hauptgruppe zugeordneten Getriebewelle, bis eine Differenzdrehzahl klein genug ist.

***Es wird vorgeschlagen**,* dass die Nebengruppen-Schalteinheit eine Synchronisierung aufweist und die Steuer- und/oder Regeleinheit in dem Schaltvorgang dazu vorgesehen ist, die Zentral-Synchronisiereinheit der Hauptgruppe während einer Synchronisierphase der Nebengruppen-Schalteinheit zu betätigen. Dadurch kann erreicht werden, dass die Steuer- und/oder Regeleinheit die Zentral-Synchronisiereinheit der Hauptgruppe betätigt, bevor eine drehfeste Verbindung der Nebengruppen-Schalteinheit vorliegt. Die Betätigungsphase der Nebengruppen-Schalteinheit ist dabei vorteilhafterweise kürzer als die Betätigungsphase der Zentral-Synchronisiereinheit. Die Betätigungsphase der Nebengruppen-Schalteinheit weist vorzugsweise eine Synchronisierphase und ein Durchschalten auf. Unter einer "Synchronisierphase" soll insbesondere eine Phase verstanden werden, in der durch die Synchronisierung der Nebengruppen-Schalteinheit eine reibschlüssige Verbindung zwischen zumindest zwei Gruppengetriebeelementen vorliegt. Unter einem "Durchschalten" soll insbesondere ein Herstellen einer formschlüssigen Verbindung zwischen den zumindest zwei Gruppengetriebeelementen durch die Nebengruppen-Schalteinheit verstanden werden.
In einer vorteilhaften Ausgestaltung ist die Steuer- und/oder Regeleinheit dazu vorgesehen, mittels der Zentral-Synchronisiereinheit die Nebengruppen-Schalteinheit zumindest teilweise zu synchronisieren. Dadurch kann ein Verschleiß der Synchronisierung der Nebengruppen-Schalteinheit vermindert werden. Unter einer "teilweisen Synchronisierung" soll insbesondere verstanden werden, dass eine Differenzdrehzahl der Nebengruppen-Schalteinheit reduziert wird. Nach der teilweisen Synchronisierung weist die Differenzdrehzahl vorzugsweise einen Wert größer Null auf.
Weiter wird vorgeschlagen, dass die Zentral-Synchronisiereinheit zumindest einen aktiven Synchronsteller mit einem getriebefesten Stator aufweist, der dazu vorgesehen ist, eine Drehzahl einer Getriebewelle zu ändern. Dadurch kann auf einfache Weise eine aktive Synchronisierung realisiert werden. Unter einem "aktiven Synchronsteller" soll insbesondere ein Steller verstanden werden, der ein Synchronisiermoment bei Bedarf bereitstellen kann. Der aktive Synchronsteller wird vorzugsweise durch die Steuer- und/oder Regeleinheit gesteuert und/oder geregelt. Der aktive Synchronsteller ist vorteilhafterweise als eine Bremse und/oder ein E-Motor ausgebildet. Ferner ist die Zentral-Synchronisiereinheit druckgesteuert und die Steuer- und/oder Regeleinheit dazu vorgesehen, die Zentral-Synchronisiereinheit während einer Betätigungsphase der Nebengruppen-Schalteinheit mit einem Betätigungsdruck zu beaufschlagen. Dadurch kann auf einfache Weise eine parallele Betätigung der Nebengruppen-Schalteinheit und der Zentral-Synchronisierung realisiert werden. Unter "druckgesteuert" soll insbesondere eine pneumatisch und/oder hydraulisch betätigbare Bremse verstanden werden.

Ferner wird vorgeschlagen, dass die Nebengruppen-Schalteinheit druckgesteuert ist und die Steuer- und/oder Regeleinheit dazu vorgesehen ist, die Nebengruppen-Schalteinheit mit einem Betätigungsdruck zu beaufschlagen, bevor die Zentral-Synchronisiereinheit mit dem Betätigungsdruck beaufschlagt wird. Dadurch kann besonders einfach die Betätigungsphase der Zentral-Synchronisiereinheit in die Betätigungsphase der Nebengruppen-Schalteinheit gelegt werden.
Insbesondere ist es vorteilhaft, wenn die Steuer- und/oder Regeleinheit dazu vorgesehen ist, die Zentral-Synchronisiereinheit während einer Synchronisierphase der Nebengruppen-Schalteinheit mit dem Betätigungsdruck zu beaufschlagen. Dadurch kann die Zentral-Synchronisiereinheit die Synchronisierung der Nebengruppen-Schalteinheit unterstützen.

Ferner ist die Steuer- und/oder Regeleinheit dazu vorgesehen während der Betätigungsphase der Nebengruppen-Schalteinheit den Betätigungsdruck der Zentral-Synchronisiereinheit im Wesentlichen auf Null zu senken. Dadurch kann eine Bedienbarkeit der Zentral-Synchronisiereinheit erleichtert werden.
Außerdem wird vorgeschlagen, dass die Steuer- und/oder Regeleinheit in zumindest einem Betriebszustand dazu vorgesehen ist, den Betätigungsdruck der Zentral-Synchronisiereinheit im Wesentlichen auf Null zu senken, bevor die Synchronisierphase der Nebengruppen-Schalteinheit beendet ist. Dadurch kann ein Rutschen von Formschlussverzahnungen verhindert werden, wodurch ein Schaltkomfort verbessert werden kann.
Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

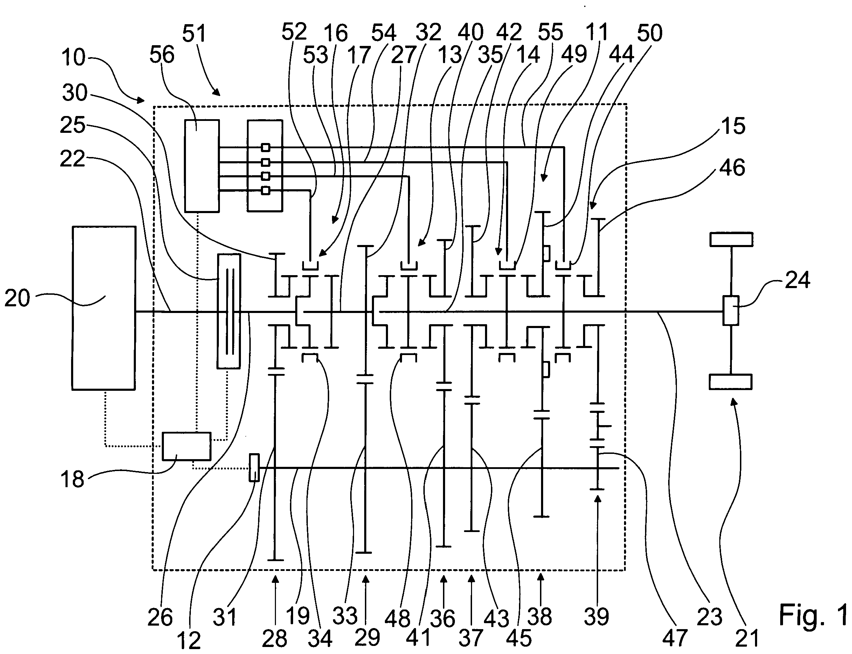

Figur 1 zeigt schematisiert einen Antriebsstrang eines Nutzfahrzeugs mit einer Gruppengetriebevorrichtung 10. Die Gruppengetriebevorrichtung 10 ist als eine Nutzfahrzeuggruppengetriebevorrichtung, wie beispielsweise eine Lastkraftfahrzeuggruppengetriebevorrichtung, ausgebildet. Weiter ist in Figur 1 eine Antriebsmaschine 20 und Antriebsräder 21 eines nicht näher dargestellten Lastkraftfahrzeugs dargestellt. Die Antriebsmaschine 20 ist als eine Brennkraftmaschine ausgebildet. Zur Einleitung eines Drehmoments in die Gruppengetriebevorrichtung 10 weist die Gruppengetriebevorrichtung 10 eine Antriebswelle 22 auf. Die Antriebswelle 22 verbindet die Gruppengetriebevorrichtung 10 mit der Antriebsmaschine 20. Zur Ausleitung eines, durch eine Getriebegesamtübersetzung übersetzten Drehmoments weist die Gruppengetriebevorrichtung 10 eine Abtriebswelle 23 auf. Die Abtriebswelle 23 verbindet die Gruppengetriebevorrichtung 10 über ein Achsgetriebe 24 mit den Antriebsrädern 21.

Zum Herstellen und Lösen einer Verbindung der Gruppengetriebevorrichtung 10 mit der Antriebsmaschine 20 weist die Gruppengetriebevorrichtung 10 eine Kupplung 25 auf. Die Kupplung 25 ist als eine Lamellenkupplung ausgebildet. Die Kupplung 25 weist zwei Betätigungszustände auf. In dem ersten Betätigungszustand ist die Kupplung 25 geöffnet. Im geöffneten Betätigungszustand ist die Kupplung 25 drucklos. In dem geöffneten Betätigungszustand ist die Verbindung zwischen der Gruppengetriebevorrichtung 10 und der Antriebsmaschine 20 gelöst. In dem zweiten Betätigungszustand ist die Kupplung 25 geschlossen. Im geschlossenen Betätigungszustand ist die Kupplung 25 druckbehaftet. In dem geschlossenen Betätigungszustand ist die Verbindung zwischen der Gruppengetriebevorrichtung 10 und der Antriebsmaschine 20 hergestellt. Die Antriebsmaschine 20 ist in einem Kraftfluss der Kupplung 25 vorgeschaltet.

Zur Bereitstellung der Getriebegesamtübersetzung weist die Gruppengetriebevorrichtung 10 eine Nebengruppe 16 und eine Hauptgruppe 11 auf. Die Hauptgruppe 11 umfasst eine Getriebewelle 19. Die Getriebewelle 19 ist als eine Vorgelegewelle ausgebildet. Die Getriebewelle 19 ist parallel zu der Antriebswelle 22 angeordnet.

Die Nebengruppe 16 ist über eine, koaxial zu der Antriebswelle 22 angeordnete Getriebeeingangswelle 26 an die Kupplung 25 angebunden. Die Nebengruppe 16 ist über eine Zwischenwelle 27 oder über die Getriebewelle 19 an die Hauptgruppe 11 anbindbar. Die Nebengruppe 16 ist als ein Vorschaltgetriebe ausgebildet. Die Nebengruppe 16 ist in dem Kraftfluss der Kupplung 25 nachgeschaltet und der Hauptgruppe 11 vorgeschaltet. Zur Bereitstellung einer Wirkverbindung der Getriebeeingangswelle 26 mit der Getriebewelle 19 umfasst die Nebengruppe 16 zwei verschiedene Zahnradpaarungen 28, 29. Die Zahnradpaarungen 28, 29 weisen eine unterschiedliche Übersetzung auf. Die Zahnradpaarung 28 weist ein, auf der Getriebeeingangswelle 26 drehbar angeordnetes Losrad 30 und ein, auf der Getriebewelle 19 drehfest angeordnetes Festrad 31 auf. Die Zahnradpaarung 29 weist ein, auf der Zwischenwelle 27 drehfest angeordnetes Festrad 32 und ein, auf der Getriebewelle 19 drehfest angeordnetes Festrad 33 auf.

Zur Einstellung und zur Änderung einer Nebengruppenübersetzung weist die Nebengruppe 16 eine Nebengruppen-Schalteinheit 17 auf. Die Nebengruppen-Schalteinheit 17 ist druckgesteuert. Die Nebengruppen-Schalteinheit 17 weist eine Synchronisierung auf. Die Synchronisierung ist als eine mechanische Synchronisierung ausgebildet. Zur Anpassung einer Drehzahl des Losrads 30 und der Getriebeeingangswelle 26 stellt die Synchronisierung in einer Synchronisierphase eine reibschlüssige Verbindung zwischen der Getriebeeingangswelle 26 und dem Losrad 30 her. Zur Anpassung einer Drehzahl der Zwischenwelle 27 und der Getriebeeingangswelle 26 stellt die Synchronisierung in einer Synchronisierphase eine reibschlüssige Verbindung zwischen der Getriebeeingangswelle 26 und der Zwischenwelle 27 her. Sobald eine Differenzdrehzahl der Getriebeeingangswelle 26 und dem Losrad 30 oder der Zwischenwelle 27 nahezu Null ist, stellt die Nebengruppen-Schalteinheit 17 bei einem Durchschalten eine formschlüssige Verbindung zwischen dem entsprechenden Losrad 30 und der Getriebeeingangswelle 26 oder der Zwischenwelle 27 ein. Die Synchronisierung weist dazu einen Synchronkörper mit zwei Synchronringen auf.

Die Nebengruppen-Schalteinheit 17 weist zwei Schaltstellungen und eine Neutralstellung auf. Zur Schaltung der Schaltstellungen und der Neutralstellung weist die Nebengruppen-Schalteinheit 17 eine Schaltmuffe 34 auf. Die Schaltmuffe 34 ist bezüglich der Getriebeeingangswelle 26 und der Zwischenwelle 27 axial verschiebbar. In der ersten Schaltstellung verbindet die Nebengruppen-Schalteinheit 17 die Getriebeeingangswelle 26 über das Zahnradpaar 28 mit der Getriebewelle 19. In der zweiten Schaltstellung verbindet die Nebengruppen-Schalteinheit 17 die Getriebeeingangswelle 26 mit der Zwischenwelle 27 und damit auch über das Zahnradpaar 29 mit der Getriebewelle 19. In der Neutralstellung entkoppelt die Nebengruppen-Schalteinheit 17 die Getriebeeingangswelle 26 von der Getriebewelle 19 und der Zwischenwelle 27.

Die Hauptgruppe 11 ist über eine koaxial zu der Zwischenwelle 27 angeordnete Hauptwelle 35 an die Abtriebswelle 23 angebunden. Die Hauptwelle 35 und die Abtriebswelle 23 sind einstückig ausgebildet. Die Hauptgruppe 11 ist als ein Hauptgetriebe ausgebildet. Die Hauptgruppe 11 ist in dem Kraftfluss den Antriebsrädern 21 vorgeschaltet. Zur Bereitstellung einer Wirkverbindung der Hauptwelle 35 mit der Getriebewelle 19 umfasst die Hauptgruppe 11 vier verschiedene Zahnradpaarungen 36, 37, 38, 39. Die Zahnradpaarungen 36, 37, 38, 39 weisen eine unterschiedliche Übersetzung auf. Die Zahnradpaarung 36 weist ein auf der Hauptwelle 35 drehbar angeordnetes Losrad 40 und ein auf der Getriebewelle 19 drehfest angeordnetes Festrad 41 auf. Die Zahnradpaarung 37 weist ein auf der Hauptwelle 35 drehbar angeordnetes Losrad 42 und ein auf der Getriebewelle 19 drehfest angeordnetes Festrad 43 auf. Die Zahnradpaarung 38 weist ein auf der Hauptwelle 35 drehbar angeordnetes Losrad 44 und ein auf der Getriebewelle 19 drehfest angeordnetes Festrad 45 auf. Die Zahnradpaarung 39 weist ein auf der Hauptwelle 35 drehbar angeordnetes Losrad 46, ein auf der Getriebewelle 19 drehfest angeordnetes Festrad 47 sowie ein Umkehrrad auf und ist zur Bildung eines Rückwärtsgetriebegangs vorgesehen.

Zur Einstellung und zur Änderung einer Hauptgruppenübersetzung weist die Hauptgruppe 11 drei Hauptgruppen-Schalteinheiten 13, 14, 15 auf. Die Hauptgruppen-Schalteinheiten 13, 14, 15 sind druckgesteuert. Die Hauptgruppen-Schalteinheiten 13, 14, 15 weisen jeweils zwei Schaltstellungen und eine Neutralstellung auf. Zur Schaltung der Schaltstellungen und der Neutralstellung weisen die Hauptgruppengruppen-Schalteinheiten 13, 14, 15 jeweils eine Schaltmuffe 48, 49, 50 auf. Die Schaltmuffen 48, 49, 50 sind bezüglich der Hauptwelle 35 axial verschiebbar. Dabei ist die Schaltmuffe 48 der Hauptgruppen-Schalteinheit 13, die Schaltmuffe 49 der Hauptgruppen-Schalteinheit 14 und die Schaltmuffe 50 der Hauptgruppen-Schalteinheit 15 zugeordnet.

Die Hauptgruppen-Schalteinheit 13 weist eine Neutralstellung und zwei Schaltstellungen auf. In der ersten Schaltstellung der Hauptgruppen-Schalteinheit 13 verbindet die Hauptgruppen-Schalteinheit 13 die Hauptwelle 35 mit der Zwischenwelle 27 und über das Zahnradpaar 29 mit der Getriebewelle 19. In der zweiten Schaltstellung der Hauptgruppen-Schalteinheit 13 verbindet die Hauptgruppen-Schalteinheit 13 die Hauptwelle 35 über das Zahnradpaar 36 mit der Getriebewelle 19. In der Neutralstellung der Hauptgruppen-Schalteinheit 13 entkoppelt die Hauptgruppen-Schalteinheit 13 die Hauptwelle 35 von der Zwischenwelle 27 und von der Getriebewelle 19. Die Hauptgruppen-Schalteinheit 14 weist eine Neutralstellung und zwei Schaltstellungen auf. In der ersten Schaltstellung der Hauptgruppen-Schalteinheit 14 verbindet die Hauptgruppen-Schalteinheit 14 die Hauptwelle 35 über das Zahnradpaar 37 mit der Getriebewelle 19. In der zweiten Schaltstellung der Hauptgruppen-Schalteinheit 14 verbindet die Hauptgruppen-Schalteinheit 14 die Hauptwelle 35 über das Zahnradpaar 38 mit der Getriebewelle 19. In der Neutralstellung der Hauptgruppen-Schalteinheit 14 entkoppelt die Hauptgruppen-Schalteinheit 14 die Hauptwelle 35 von der Getriebewelle 19. Die Hauptgruppen-Schalteinheit 15 weist eine Neutralstellung und eine Schaltstellung auf. In der Schaltstellung der Hauptgruppen-Schalteinheit 15 verbindet die Hauptgruppen-Schalteinheit 15 die Hauptwelle 35 über das Zahnradpaar 39 mit der Getriebewelle 19. In der Neutralstellung der Hauptgruppen-Schalteinheit 15 entkoppelt die Hauptgruppen-Schalteinheit 15 die Hauptwelle 35 von der Getriebewelle 19.

Zur axialen Bewegung der Schaltmuffen 34, 48, 49, 50 und damit zur Schaltung der Schaltstellungen und der Neutralstellungen der Nebengruppen-Schalteinheit 17 und der Hauptgruppen-Schalteinheiten 13, 14, 15 weist die Gruppengetriebevorrichtung 10 eine Betätigungseinrichtung 51 auf. Die Betätigungseinrichtung 51 ist druckgesteuert. Die Betätigungseinrichtung 51 weist vier Schaltstangen 52, 53, 54, 55 auf. Dabei bewegt die Schaltstange 52 die Schaltmuffe 34, die Schaltstange 53 die Schaltmuffe 48, die Schaltstange 54 die Schaltmuffe 49 und die Schaltstange 55 die Schaltmuffe 50. Zur druckgesteuerten Bewegung der Schaltstangen 52, 53, 54, 55 weist die Betätigungseinrichtung 51 einen gemeinsamen Betätigungsaktuator 56 auf. Der Betätigungsaktuator 56 ist als ein pneumatischer Betätigungsaktuator ausgebildet. Grundsätzlich kann die Betätigungseinrichtung 51 mehrere Betätigungsaktuatoren aufweisen, beispielsweise jeweils einen zur Schaltung einer Schalteinheit.

Zur Synchronisierung der drei Hauptgruppen-Schalteinheiten 13, 14, 15 weist die Hauptgruppe 11 eine Zentral-Synchronisiereinheit 12 auf. Die Zentral-Synchronisiereinheit 12 ist druckgesteuert. Die Zentral-Synchronisiereinheit 12 weist einen aktiven Synchronsteller mit einem getriebefesten Stator auf. Der aktive Synchronsteller ist als eine Bremse ausgebildet. Der aktive Synchronsteller ist als eine pneumatisch betätigbare Lamellenbremse ausgebildet. Die Zentral-Synchronisiereinheit 12 ändert eine Drehzahl der Getriebewelle 19, indem sie die Getriebewelle 19 gegenüber einem Getriebegehäuse abbremst. Die Zentral-Synchronisiereinheit 12 gleicht also eine Drehzahl der, als Vorgelegewelle ausgebildeten Getriebewelle 19 und eine Drehzahl der Hauptwelle 35 durch Verzögern der Getriebewelle 19 an. Die Zentral-Synchronisiereinheit 12 ist also allen drei Hauptgruppen-Schalteinheiten 13, 14, 15 zugeordnet.

Zur Einstellung und zur Änderung der Getriebegesamtübersetzung weist die Gruppengetriebevorrichtung 10 eine elektronische Steuer- und Regeleinheit 18 auf. Die Steuer- und Regeleinheit 18 kommuniziert dabei mit der Antriebsmaschine 20, mit dem Betätigungsaktuator 56, mit der Kupplung 25 und der Zentral-Synchronisiereinheit 12. Die Steuer- und Regeleinheit 18 betätigt die Nebengruppen-Schalteinheit 17 und die Hauptgruppen-Schalteinheiten 13, 14, 15 über den Betätigungsaktuator 56. Über den aktiven Synchronsteller betätigt die Steuer- und Regeleinheit 18 die Zentral-Synchronisiereinheit 12.

Eine Betätigungsdauer der Zentral-Synchronisiereinheit 12, in der der Synchronsteller aktiv ist und damit ein Bremsmoment auf die Getriebewelle 19 aufbringt, ist von der Steuer- und Regeleinheit 18 variabel einstellbar. Zur Einstellung der Betätigungsdauer kommuniziert die Steuer- und Regeleinheit 18 mit einer nicht näher dargestellten Sensorik. Die Sensorik erfasst mehrere Kenngrößen der Gruppengetriebevorrichtung 10.

Zur Anpassung der Betätigungsdauer der Zentral-Synchronisiereinheit 12 weist die Steuer- und Regeleinheit 18 eine Adaptionsfunktion auf. Die Adaptionsfunktion passt die Betätigungsdauer in Abhängigkeit der Kenngrößen an. Die Steuer- und Regeleinheit 18 ermittelt aus den Kenngrößen einen Drehzahlsprung der Getriebewelle 19 bei einer Änderung der Getriebegesamtübersetzung. Die Adaptionsfunktion passt somit die Betätigungsdauer der Zentral-Synchronisiereinheit 12 in Abhängigkeit des Drehzahlsprungs der Getriebewelle 19 an. Der von der Steuer- und Regeleinheit 18 ermittelte Drehzahlsprung ist also eine Differenz von einer, beim Beginn eines Schaltvorgangs vorliegenden Ist-Drehzahl der Getriebewelle 19 und einer, nach dem Schaltvorgang gewünschten Ziel-Drehzahl der Getriebewelle 19. Die Adaptionsfunktion passt die Betätigungsdauer der Zentral-Synchronisierung 12 in Abhängigkeit eines Erreichens der Ziel-Drehzahl nach dem Schaltvorgang an.

In einem Teil der Hochschaltvorgänge schaltet die Steuer- und Regeleinheit 18 zur Schaltung in einen nächst höheren Getriebegang zuerst die Kupplung 25 in ihren offenen Betätigungszustand. Anschließend betätigt die Steuer- und Regeleinheit 18 die Nebengruppen-Schalteinheit 17, die Hauptgruppen-Schalteinheiten 13, 14, 15 und die Zentral-Synchronisiereinheit 12. Dabei betätigt die Steuer- und Regeleinheit 18 die Nebengruppen-Schalteinheit 17 und die Zentral-Synchronisiereinheit 12 zeitweise parallel. Die Steuer- und Regeleinheit 18 betätigt also die Zentral-Synchronisiereinheit 12 und die Nebengruppen-Schalteinheit 17 für eine bestimmte Zeitspanne gleichzeitig. Der Synchronsteller der Zentral-Synchronisiereinheit 12 ist damit, während die Nebengruppen-Schalteinheit 17 betätigt wird, aktiv. Die Zentral-Synchronisiereinheit 12 verändert durch Abbremsen der Getriebewelle 19 aktiv die Drehzahl der Getriebewelle 19 und verringert eine Differenzdrehzahl in den Hauptgruppen-Schalteinheiten 13, 14, 15.

Die Steuer- und Regeleinheit 18 betätigt die Zentral-Synchronisiereinheit 12 der Hauptgruppe 11 während der Synchronisierphase der Nebengruppen-Schalteinheit 17, d.h. während einer Phase, in der die Synchronisierung der Nebengruppen-Schalteinheit 17 stattfindet. Durch das parallele Betätigen der Nebengruppen-Schalteinheit 17 und der Zentral-Synchronisiereinheit 12 synchronisiert die Steuer- und Regeleinheit 18 die Nebengruppen-Schalteinheit 17 teilweise. Somit unterstützt die Steuer- und Regeleinheit 18 durch das parallele Betätigen die Synchronisierung der Nebengruppen-Schalteinheit 17. Nachdem die Steuer- und Regeleinheit 18 die Nebengruppen-Schalteinheit 17 und die entsprechende Hauptgruppen-Schalteinheit 13, 14, 15 geschaltet hat, schaltet sie die Kupplung 25 in ihren geschlossenen Betätigungszustand.

Für die nachfolgende Beschreibung wird von einem Betriebszustand ausgegangen, in dem eine Getriebegesamtübersetzung durch die zweite Schaltstellung der Nebengruppen-Schalteinheit 17 und die erste Schaltstellung der Hauptgruppen-Schalteinheit 14 eingestellt ist. Die Hauptgruppen-Schalteinheit 13 und die Hauptgruppen-Schalteinheit 15 sind jeweils in ihre Neutralstellung geschaltet. Die Getriebegesamtübersetzung ergibt sich aus der durch die zweite Schaltstellung der Nebengruppen-Schalteinheit 17 eingestellten Nebengruppenübersetzung und der durch die erste Schaltstellung der Hauptgruppen-Schalteinheit 14 eingestellte Hauptgruppenübersetzung.

In einem beispielhaften Schaltvorgang, in dem ausgehend von dem oben beschriebenen Betriebszustand von einem Fahrer des Lastkraftfahrzeugs ein nächst höherer Getriebegang gefordert wird, verringert die Steuer- und Regeleinheit 18 zuerst den Betätigungsdruck in der Kupplung 25. Die Steuer- und Regeleinheit 18 schaltet damit die Kupplung 25 in ihren offenen Betätigungszustand. Dadurch entkoppelt die Steuer- und Regeleinheit 18 die Gruppengetriebevorrichtung 10 von der Antriebsmaschine 20.

Daraufhin beaufschlagt die Steuer- und Regeleinheit 18 die Hauptgruppen-Schalteinheit 14 mit einem Betätigungsdruck. Durch die Beaufschlagung der Hauptgruppen-Schalteinheit 14 verschiebt der Betätigungsaktuator 56 die Schaltmuffe 49 mit der Schaltstange 54 axial in Richtung Antriebsräder 21 und schaltet damit die Hauptgruppen-Schalteinheit 14 in die Neutralstellung. Anschließend beaufschlagt die Steuer- und Regeleinheit 18 über den aktiven Synchronsteller die Zentral-Synchronisiereinheit 12 während einer Betätigungsphase der Nebengruppen-Schalteinheit 17 mit einem Betätigungsdruck. Die Steuer- und Regeleinheit 18 betätigt somit die Zentral-Synchronisiereinheit 12 während die Nebengruppen-Schalteinheit 17 betätigt wird. Dabei beaufschlagt die Steuer- und Regeleinheit 18 die Nebengruppen-Schalteinheit 17, bevor sie die Zentral-Synchronisiereinheit 12 mit dem Betätigungsdruck beaufschlagt.

Durch die Beaufschlagung der Nebengruppen-Schalteinheit 17 verschiebt der Betätigungsaktuator 56 die Schaltmuffe 34 mit der Schaltstange 53 axial in Richtung Antriebsmaschine 20. Der Betätigungsaktuator 56 bewegt also die Nebengruppen-Schalteinheit 17 in ihre erste Schaltstellung und stellt somit eine größere Nebengruppenübersetzung in der Nebengruppe 16 ein. Dabei synchronisiert die Synchronisierung der Nebengruppen-Schalteinheit 17 und synchronisiert, während der Betätigungsphase der Nebengruppen-Schalteinheit 17, in der Synchronisierphase der Nebengruppen-Schalteinheit 17 das Losrad 30 und die Getriebeeingangswelle 26. Während der Synchronisierphase der Nebengruppen-Schalteinheit 17 beaufschlagt die Steuer- und Regeleinheit 18 die Zentral-Synchronisiereinheit 12 mit dem Betätigungsdruck.

Nach der Synchronisierphase, also nachdem eine Differenzdrehzahl von dem Losrad 30 und der Getriebeeingangswelle 26 nahezu Null ist, stellt die Nebengruppen-Schalteinheit 17 durch Durchschalten eine formschlüssige Verbindung zwischen dem Losrad 30 und der Getriebeeingangswelle 26 her. Nach dem Durchschalten ist die Nebengruppen-Schalteinheit 17 in ihrer ersten Schaltstellung und die größere Nebengruppenübersetzung ist eingestellt. Die Synchronisierphase und das Durchschalten der Nebengruppen-Schalteinheit 17 ist typischerweise nach zirka 200 Millisekunden abgeschlossen.

Während der Betätigungsphase der Nebengruppen-Schalteinheit 17 senkt die Steuer- und Regeleinheit 18 den Betätigungsdruck der Zentral-Synchronisiereinheit 12 auf nahezu Null. Die Betätigungsphase der Zentral-Synchronisiereinheit 12 liegt damit innerhalb der Betätigungsphase der Nebengruppen-Schalteinheit 17. Die Steuer- und Regeleinheit 18 senkt dabei den Betätigungsdruck der Zentral-Synchronisiereinheit 12 auf nahezu Null, bevor die Synchronisierphase der Nebengruppen-Schalteinheit 17 beendet ist. Die Steuer- und Regeleinheit 18 betätigt also die Zentral-Synchronisiereinheit 12 lediglich in der Synchronisierphase der Nebengruppen-Schalteinheit 17. Die Zentral-Synchronisiereinheit 12 ist beim Durchschalten nicht aktiv. Die Zentral-Synchronisiereinheit 12 ist beim formschlüssigen Verbinden des Losrads 30 und der Getriebeeingangswelle 26 unbetätigt.

Nach Ablauf der Betätigungsdauer der Zentral-Synchronisiereinheit 12 ist die Hauptgruppen-Schalteinheit 14 synchronisiert. Die Steuer- und Regeleinheit 18 beaufschlagt die Hauptgruppen-Schalteinheit 14 nach Ablauf der Betätigungsdauer mit einem Betätigungsdruck. Durch die Beaufschlagung der Hauptgruppen-Schalteinheit 14 verschiebt der Betätigungsaktuator 56 die Schaltmuffe 49 mit der Schaltstange 53 axial in Richtung Antriebsräder 21. Der Betätigungsaktuator 56 bewegt die Hauptgruppen-Schalteinheit 14 in ihre zweite Schaltstellung und stellt somit eine kleinere Hauptgetriebeübersetzung in der Hauptgruppe 11 ein. Die Betätigungsdauer der Zentral-Synchronisiereinheit 12 liegt typischerweise bei 20-50 Millisekunden.

Nach einem Durchschalten der Hauptgruppen-Schalteinheit 14 in die zweite Schaltstellung und damit nachdem eine formschlüssige Verbindung der Hauptwelle 35 und der Getriebewelle 19 vorliegt, schaltet die Steuer- und Regeleinheit 18 die Kupplung in ihren geschlossenen Betätigungszustand und verbindet die Gruppengetriebevorrichtung 10 mit der Antriebsmaschine 20. Die Änderung der kleineren Getriebegesamtübersetzung und damit die Schaltung eines nächst höheren Getriebegangs ist abgeschlossen. Die Schaltung in den nächst höheren Getriebegang ist typischerweise nach zirka 350 Millisekunden abgeschlossen.

## Patentansprüche

1. Gruppengetriebevorrichtung, insbesondere eine Nutzfahrzeuggruppengetriebevorrichtung, mit einer Hauptgruppe (11), die eine mehreren Schalteinheiten (13, 14, 15) zugeordnete Zentral-Synchronisiereinheit (12) zur Synchronisierung von zumindest zwei Hauptgruppen-Schalteinheiten (13, 14, 15), zur Änderung einer Hauptgruppenübersetzung, aufweist, mit einer Nebengruppe (16), die eine Nebengruppen-Schalteinheit (17) zur Änderung einer Nebengruppenübersetzung aufweist, und mit einer Steuer- und/oder Regeleinheit (18), die dazu vorgesehen ist, in einem Schaltvorgang, bei dem zur Änderung einer Getriebegesamtübersetzung die Hauptgruppe und die Nebengruppe geschaltet werden, die Nebengruppen-Schalteinheit (17) und die Zentral-Synchronisiereinheit (12) zu betätigen,
wobei die Steuer- und/oder Regeleinheit (18) dazu vorgesehen ist, die Nebengruppen-Schalteinheit (17) und die Zentral-Synchronisiereinheit (12) zumindest zeitweise parallel zu betätigen,
wobei die Zentral-Synchronisiereinheit (12) dazu vorgesehen ist, eine Synchronisierwirkung unabhängig von einer Betätigung einer der Zentral-Synchronisiereinheit (12) zugeordneten Schalteinheit (13, 14, 15) aufzubringen,
**dadurch gekennzeichnet, dass**
die Zentral-Synchronisiereinheit (12) druckgesteuert ist und die Steuer- und/oder Regeleinheit (18) dazu vorgesehen ist, die Zentral-Synchronisiereinheit (12) während einer Betätigungsphase der Nebengruppen-Schalteinheit (17) mit einem Betätigungsdruck zu beaufschlagen, und wobei die Steuer- und/oder Regeleinheit (18) dazu vorgesehen ist, während der Betätigungsphase der Nebengruppen-Schalteinheit (17) den Betätigungsdruck der Zentral-Synchronisiereinheit (12) im Wesentlichen auf Null zu senken.

2. Gruppengetriebevorrichtung nach Anspruch 1,
**dadurch gekennzeichnet, dass**
die Nebengruppen-Schalteinheit (17) eine Synchronisierung aufweist und die Steuer- und/oder Regeleinheit (18) dazu vorgesehen ist, die Zentral-Synchronisiereinheit (12) der Hauptgruppe (11) während einer Synchronisierphase der Nebengruppen-Schalteinheit (17) zu betätigen.

3. Gruppengetriebevorrichtung nach Anspruch 1 oder 2,
**dadurch gekennzeichnet, dass**
die Steuer- und/oder Regeleinheit (18) dazu vorgesehen ist, mittels der Zentral-Synchronisiereinheit (12) die Nebengruppen-Schalteinheit (17) zumindest teilweise zu synchronisieren.

4. Gruppengetriebevorrichtung nach einem der vorhergehenden Ansprüche, **dadurch gekennzeichnet, dass**
die Zentral-Synchronisiereinheit (12) zumindest einen aktiven Synchronsteller mit einem getriebefesten Stator aufweist, der dazu vorgesehen ist, eine Drehzahl einer Getriebewelle (19) zu ändern, indem die Zentral-Synchronisiereinheit (12) die Getriebewelle (19) gegenüber einem Getriebegehäuse abbremst.

5. Gruppengetriebevorrichtung nach Anspruch 1,
**dadurch gekennzeichnet, dass**
die Nebengruppen-Schalteinheit (17) druckgesteuert ist und die Steuer- und/oder Regeleinheit (18) dazu vorgesehen ist, die Nebengruppen-Schalteinheit (17) mit einem Betätigungsdruck zu beaufschlagen, bevor die Zentral-Synchronisiereinheit (12) mit dem Betätigungsdruck beaufschlagt wird.

6. Gruppengetriebevorrichtung nach Anspruch 1,
**dadurch gekennzeichnet, dass**
die Steuer- und/oder Regeleinheit (18) dazu vorgesehen ist, die Zentral-Synchronisiereinheit (12) während einer Synchronisierphase der Nebengruppen-Schalteinheit (17) mit dem Betätigungsdruck zu beaufschlagen.

7. Gruppengetriebevorrichtung nach Anspruch 1,
**dadurch gekennzeichnet, dass**
die Steuer- und/oder Regeleinheit (18) in zumindest einem Betriebszustand dazu vorgesehen ist, den Betätigungsdruck der Zentral-Synchronisiereinheit (12) im Wesentlichen auf Null zu senken, bevor die Synchronisierphase der Nebengruppen-Schalteinheit (17) beendet ist.

8. Verfahren für eine Gruppengetriebevorrichtung, insbesondere eine Nutzfahrzeuggruppengetriebevorrichtung, mit einer Hauptgruppe (11), die eine mehreren Schalteinheiten (13, 14, 15) zugeordnete Zentral-Synchronisiereinheit (12) zur Synchronisierung von zumindest zwei Hauptgruppen-Schalteinheiten (13, 14, 15), zur Änderung einer Hauptgruppenübersetzung, aufweist, mit einer Nebengruppe (16), die eine Nebengruppen-Schalteinheit (17) zur Änderung einer Nebengruppenübersetzung aufweist, wobei in einem Schaltvorgang zur Änderung einer Getriebegesamtübersetzung die Hauptgruppe und die Nebengruppe geschaltet werden,
wobei die Nebengruppen-Schalteinheit (17) und die Zentral-Synchronisiereinheit (12) in dem Schaltvorgang zur Änderung einer Getriebegesamtübersetzung zumindest zeitweise parallel betätigt werden
wobei die Zentral-Synchronisiereinheit (12) eine Synchronisierwirkung unabhängig von einer Betätigung einer der Zentrl-Synchronisiereinheit (12) zugeordneten Schalteinheit (13, 14, 15) aufbringt,
**dadurch gekennzeichnet, dass**
die Zentral-Synchronisiereinheit (12) druckgesteuert ist und die Steuer- und/oder Regeleinheit (18) die Zentral-Synchronisiereinheit (12) während einer Betätigungsphase der Nebengruppen-Schalteinheit (17) mit einem Betätigungsdruck beaufschlagt, und wobei die Steuer- und/oder Regeleinheit (18) während der Betätigungsphase der Nebengruppen-Schalteinheit (17) den Betätigungsdruck der Zentral-Synchronisiereinheit (12) im Wesentlichen auf null senkt.

## Claims

1. Group transmission device, in particular commercial vehicle group transmission device, comprising a main group (11) having a central synchroniser unit (12) assigned to a plurality of shifting units (13, 14, 15) for synchronising at least two main group shifting units (13, 14, 15) to change a main group ratio, further comprising a secondary group (16) having a secondary group shifting unit (17) to change a secondary group ratio, and further comprising an open- and/or closed-loop control unit (18) provided for the actuation of the secondary group shifting unit (17) and the central synchroniser unit (12) in a shifting operation in which the main group and the secondary group are shifted to change a transmission overall ratio,
wherein the open- and/or closed-loop control unit (18) is provided for the at least temporary parallel actuation of the secondary group shifting unit (17) and the central synchroniser unit (12),
wherein the central synchroniser unit (12) is provided for applying a synchronising action independent of an actuation of a shifting unit (13, 14, 15) assigned to the central synchroniser unit (12),
**characterised in that**
the central synchroniser unit (12) is pressure-controlled and the open- and/or closed-loop control unit (18) is provided for applying an actuating pressure to the central synchroniser unit (12) during an actuation phase of the secondary group shifting unit (17), and **in that** the open- and/or closed-loop control unit (18) is provided for reducing the actuating pressure of the central synchroniser unit (12) substantially to zero during the actuation phase of the secondary group shifting unit (17).

2. Group transmission device according to claim 1,
**characterised in that**
the secondary group shifting unit (17) has a synchromesh mechanism and the open- and/or closed-loop control unit (18) is provided for actuating the central synchroniser unit (12) of the main group (11) during a synchronising phase of the secondary group shifting unit (17).

3. Group transmission device according to claim 1 or 2,
**characterised in that**
the open- and/or closed-loop control unit (18) is provided for at least partially synchronising the secondary group shifting unit (17) by means of the central synchroniser unit (12).

4. Group transmission device according to any of the preceding claims, **characterised in that**
the central synchroniser unit (12) comprises at least one active synchronising actuator with a transmission-mounted stator, which is provided for changing a speed of a transmission shaft (19) by providing that the central synchroniser unit (12) decelerates the transmission shaft (19) relative to a transmission housing.

5. Group transmission device according to claim 1,
**characterised in that**
the secondary group shifting unit (17) is pressure-controlled and the open- and/or closed-loop control unit (18) is provided for applying an actuating pressure to the secondary group shifting unit (17) before the actuating pressure is applied to the central synchroniser unit (12).

6. Group transmission device according to claim 1,
**characterised in that**
the open- and/or closed-loop control unit (18) is provided for applying the actuating pressure to the central synchroniser unit (12) during a synchronising phase of the secondary group shifting unit (17).

7. Group transmission device according to claim 1,
**characterised in that**
the open- and/or closed-loop control unit (18) is in at least one operating state provided for reducing the actuating pressure of the central synchroniser unit (12) substantially to zero before the synchronising phase of the secondary group shifting unit (17) is terminated.

8. Method for a group transmission device, in particular commercial vehicle group transmission device, comprising a main group (11) having a central synchroniser unit (12) assigned to a plurality of shifting units (13, 14, 15) for synchronising at least two main group shifting units (13, 14, 15) to change a main group ratio, and further comprising a secondary group (16) having a secondary group shifting unit (17) to change a secondary group ratio,
wherein the main group and the secondary group are shifted in a shifting operation to change a transmission overall ratio,
wherein the secondary group shifting unit (17) and the central synchroniser unit (12) are at least temporarily actuated in parallel in the shifting process to change a transmission overall ratio,
wherein the central synchroniser unit (12) applies a synchronising action independent of an actuation of a shifting unit (13, 14, 15) assigned to the central synchroniser unit (12),
**characterised in that**
the central synchroniser unit (12) is pressure-controlled and the open- and/or closed-loop control unit (18) applies an actuating pressure to the central synchroniser unit (12) during an actuation phase of the secondary group shifting unit (17), and **in that** the open- and/or closed-loop control unit (18) reduces the actuating pressure of the central synchroniser unit (12) substantially to zero during the actuation phase of the secondary group shifting unit (17).

## Revendications

1. Dispositif de boîte de vitesses groupée, en particulier un dispositif de boîte de vitesses groupée de véhicule utilitaire, comprenant un groupe principal (11), qui présente une unité de synchronisation centrale (12) associée à plusieurs unités de commutation (13, 14, 15) pour la synchronisation d'au moins deux unités de commutation (13, 14, 15) de groupes principaux, destinée à la démultiplication de groupe principal, un groupe auxiliaire (16) qui présente une unité de commutation (17) de groupe auxiliaire destinée à la modification de la démultiplication de groupe auxiliaire, et une unité de commande et/ou de réglage (18) qui est prévue, dans un processus de commutation, pendant lequel le groupe principal et le groupe auxiliaire sont commutés pour la modification d'une multiplication totale de boîte de vitesses, pour actionner au moins partiellement en parallèle l'unité de commutation (17) de groupe auxiliaire et l'unité de synchronisation centrale (12), l'unité de réglage et/ou de commande (18) étant prévue pour actionner l'unité de commutation (17) de groupes auxiliaires et l'unité de synchronisation centrale (12), l'unité de synchronisation centrale (12) étant prévue pour appliquer un effet de synchronisation indépendamment d'un actionnement de l'une unité de commutation (13, 14, 15) associée à l'unité de synchronisation centrale (12), **caractérisé en ce que** l'unité de synchronisation centrale (12) est commandée par pression et l'unité de réglage et/ou de commande (18) est prévue pour soumettre à une pression d'actionnement l'unité de synchronisation centrale (12) pendant une phase d'actionnement de l'unité de commutation (17) de groupes auxiliaires, et l'unité de réglage et/ou de commande (18) étant prévue, pendant la phase d'actionnement de l'unité de commutation (17) de groupes auxiliaires pour réduire la pression d'actionnement de l'unité de synchronisation centrale (12) essentiellement à zéro.

2. Dispositif de boîte de vitesses groupée selon la revendication 1, **caractérisé en ce que** l'unité de commutation (17) de groupes auxiliaires présente une synchronisation et l'unité de réglage et/ou de commande (18) est prévue pour actionner l'unité de synchronisation centrale (12) du groupe principal (11) pendant une phase de synchronisation de l'unité de commutation (17) de groupes auxiliaires.

3. Dispositif de boîte de vitesses groupée selon la revendication 1 ou la revendication 2, **caractérisé en ce que** l'unité de réglage et/ou de commande (18) est prévue pour synchroniser au moins partiellement l'unité de commutation (17) de groupes auxiliaires au moyen de l'unité de synchronisation centrale (12).

4. Dispositif de boîte de vitesses groupée selon l'une quelconque des revendications précédentes, **caractérisé en ce que** l'unité de synchronisation centrale (12) présente au moins un convertisseur de tension continue actif comportant un stator fixé à la boîte de vitesses, ledit stator étant prévu pour modifier une vitesse d'un arbre de transmission (19), l'unité de synchronisation centrale (12) freinant l'arbre de transmission (19) par rapport à un boîtier de boîte de vitesses.

5. Dispositif de boîte de vitesses groupée selon la revendication 1, **caractérisé en ce que** l'unité de commutation (17) de groupes auxiliaires est commandée par pression et l'unité de réglage et/ou de commande (18) est prévue pour soumettre l'unité de commutation (17) de groupes auxiliaires à une pression d'actionnement avant que l'unité de synchronisation centrale (12) ne soit soumise à la pression d'actionnement.

6. Dispositif de boîte de vitesses groupée selon la revendication 1, **caractérisé en ce que** l'unité de réglage et/ou de commande (18) est prévue pour soumettre à la pression d'actionnement l'unité de synchronisation centrale (12) pendant une phase de synchronisation de l'unité de commutation (17) de groupes auxiliaires.

7. Dispositif de boîte de vitesses groupée selon la revendication 1, **caractérisé en ce que** l'unité de réglage et/ou de commande (18) dans au moins un état de fonctionnement est prévue pour réduire essentiellement à zéro la pression d'actionnement de l'unité de synchronisation centrale (12) avant la fin de la phase de synchronisation de l'unité de commutation (17) de groupes auxiliaires.

8. Procédé pour un dispositif de boîte de vitesses, en particulier un dispositif de boîte de vitesses groupées pour véhicule utilitaire, comprenant un groupe principal (11) qui présente une unité de synchronisation centrale (12) associées à plusieurs unités de commutation (13, 14, 15) destinée à la synchronisation d'au moins deux unités de commutation (13, 14, 15) de groupes auxiliaires, pour la modification d'une démultiplication de groupes auxiliaires, un groupe auxiliaire (16) qui présente une unité de commutation (17) de groupe auxiliaire destinée à modifier une démultiplication de groupes auxiliaires, dans un processus de commutation le groupe principal et le groupe auxiliaire sont commutés pour modifier une démultiplication totale de boîte de vitesses, l'unité de commutation (17) de groupe auxiliaire et l'unité de synchronisation centrale (12) étant actionnées au moins partiellement en parallèle pour modifier une démultiplication totale de boîte de vitesses, l'unité de synchronisation centrale (12) appliquant un effet de synchronisation indépendamment d'un actionnement d'une unité de commutation (13, 14, 15) associée à l'unité de synchronisation centrale (12), **caractérisé en ce que** l'unité de synchronisation centrale (12) est commandée par pression et l'unité de réglage et/ou de commande (18) soumet l'unité de synchronisation centrale (12) pendant une phase d'actionnement de l'unité de commutation (18) de groupe auxiliaire à une pression d'actionnement et l'unité de réglage et/ou de commande (18) pendant la phase d'actionnement de l'unité de commutation (17) de groupe auxiliaire réduit la pression d'actionnement de l'unité de synchronisation centrale (12) essentiellement à zéro.
